# EUROPÄISCHE PATENTSCHRIFT

(11) **EP 1 234 751 B1**
(45) Veröffentlichungstag und Bekanntmachung des Hinweises auf die Patenterteilung: **05.11.2008**
(21) Anmeldenummer: 02003184.5
(22) Anmeldetag: 18.02.2002
(51) Int. Cl.: B62D 25/08

(54) **Karosserievorderbau eines Kraftfahrzeuges**
Front structure for a motor vehicle
Structure avant pour un véhicule automobile

(30) Priorität: 26.02.2001 DE 20103379 U
(43) Veröffentlichungstag der Anmeldung: 28.08.2002
(73) Patentinhaber: ADAM OPEL AG, 65423 Rüsselsheim (DE)
(72) Erfinder: Wanke, Thomas, Dipl.-Ing., 55239 Gau-Odernheim (DE); Gloger, Stefan, Dr.-Ing., 64367 Mühltal (DE)

(56) Entgegenhaltungen:
- DE-A- 4 304 920
- GB-A- 670 891
- US-A- 2 228 107
- US-A- 2 662 794
- US-A- 4 560 198

## Beschreibung

Die Erfindung betrifft einen Karosserievorderbau für ein Kraftfahrzeug, mit einem sich im Wesentlichen in Längsrichtung der Karosserie von deren Frontbereich zu einer Verlängerung der Rahmenkonstruktion am Unterbodenbereich der Fahrgastzelle erstreckenden Rahmenträger, wobei der Rahmenträger in Längsrichtung von einem Frontbereich des Karosserievorderbaus in X-Richtung in einem Bogen bis zu einer Verlängerung der Rahmenkonstruktion unterhalb des Bodens der Fahrgastzelle verläuft und dazu in einem Übergangsbereich zwischen dem Karosserievorderbau und der Fahrgastzelle einen abgekröpften Bereich ausbildet, und wobei im Übergangsbereich eine sich im Wesentlichen parallel zur Stirnwand erstreckende Schwenkachse (8) ausgebildet ist.

Ein derartiger Karosserievorderbau ist für einen Fachmann auf diesem Gebiet an sich bekannt (der DE-A-43 04 920).

Gemäß der DE-A-43 04 920 ist vorgesehen, stärkeren Verformungen des Längsträgers in seinen abgekröpften Bereichen infolge von Crash bedingten Momenten dadurch entgegenzuwirken, dass sich zwischen einem Rahmenlängsträger und der Radhausversteifung eine Stützstrebe erstreckt, wobei die Radhausversteifung kraftübertragend in eine der A-Säulen übergeht. Hierdurch soll bei einer Crash bedingten Verformung des abgekröpften Längsträgerbereichs und einem hierdurch bedingten Hochschwenken um eine im Übergangsbereich zwischen Karosserievorderbau und Fahrgastzelle im Wesentlichen parallel zur Stirnwand ausgerichteten Schwenkachse erreicht werden, dass innerhalb gewisser Grenzen noch keine Verformung der unteren Stirnwand im Sinne eines Eindringens in den Fußraum auftritt.

Bei größeren Krafteinleitungen in den Rahmenlängsträger können jedoch aufgrund der im Wesentlichen senkrecht zwischen dem Rahmenlängsträger und der Radhausversteifung befestigten Stützstrebe die eingeleiteten Kräfte nur bedingt über die Radhausversteifung in die A-Säule abgeleitet werden, so dass insbesondere bei einem Frontal-Crash eine Momentenabstützung nur ungenügend gewährleistet ist und eine Deformation der Stirnwand nicht ausgeschlossen ist.

[0004a] In der US 2,662,794 ist eine selbsttragende Karosserie beschrieben, bei der zwischen den Rahmenlängsträgern und der Stirnwand jeweils geradlinig verlaufende Streben angeordnet sind.

Aus der DE-A-42 09 879 ist zur Steifigkeitserhöhung um den vorderen Radlaufbereich eine sich im Wesentlichen in Längsrichtung erstreckende Radlaufversteifung vorgesehen, die in einem vorderen Abschnitt mit dem seitlichen Verkleidungsblech des Radlaufs und in einem hinteren Abschnitt mit der A-Säule verbunden ist.

Zwar kann hierüber grundsätzlich eine Erhöhung der Steifigkeit des Radlaufbereichs erwirkt werden, bei einer im Falle eines Frontal-Crashs eingeleiteten Kraft ist jedoch aufgrund der im vorderen Radlaufbereich bereitgestellten Versteifung nur bedingt eine Deformation im vorderen Bereich des Karosserievorderbaus möglich. Aufgrund des im vorderen Bereich nur bedingt möglichen, definierten Umsetzens von kinetischer Energie in Verformungsarbeit kann folglich, insbesondere bei einem in Folge erzwungenen Hochschwenken des Längsträgers, ein Eindringen der Stirnwand in die Fahrgastzelle nicht ausgeschlossen werden.

Nach der DE-A-197 27 615 ist der Rahmenlängsträger mit einer, an einer Federbeinaufnahme anliegenden und nach vorne gerichteten Zusatzstrebe als Deformationselement bzw. zur Energieaufnahme bei Frontalkollisionen ausgebildet. Im Bereich hinter der Federbeinaufnahme gabelt sich der Längsträger in einen oberen und unteren Gabelarm, wobei der untere Gabelarm nach unten in ein horizontal unter dem Bodenblech verlaufendes Versteifungsprofil übergeht bzw. nach außen geführt, in den Türschweller übergeht. Der obere Gabelarm hingegen läuft in etwa senkrecht in das rückwärtige Ende einer seitlichen Radlaufversteifung.

Dennoch sind bereits verschiedene Maßnahmen bekannt, die einem Aufstellen des Rahmenlängsträgers bzw. in Folge des gesamten Karosserievorderbaus und einem dadurch hervorgerufenen Eindringen der Stirnwand in die Fahrgastzelle entgegenwirken, wobei die Aussteifung im unteren Übergangsbereich zwischen Karosserievorderbau und Unterbodenbereich erfolgt. Diese Maßnahmen erfordern einen hohen Materialeinsatz bzw. eine Vielzahl von Verstärkungsmitteln. Einerseits führt dies zu erhöhten Herstellungskosten. Andererseits ist die Wirkung derartiger Maßnamen bei in Folge eines frontalen Crashs einwirkenden Kräften und der dadurch hervorgerufenen Momente als Momentenabstützung gegen die Rahmenaufstellung begrenzt.

Eine Aufgabe der Erfindung ist es, einen Karosserievorderbau der gattungsbildenden Art auf einfache Art und Weise derart weiterzubilden, dass insbesondere die Rahmenaufstellung in Folge einer durch einen Frontal-Crash bedingten Krafteinleitung in den Rahmenlängsträger wesentlich reduziert und eine durch das Rahmenverhalten des Karosserievorderbaus hervorgerufene Stirnwand-Intrusion im Wesentlichen ausgeschlossen ist.

Zur erfindungsgemäßen Lösung der Aufgabe wird vorgeschlagen,
- dass zur Reduzierung der Rahmenaufstellung bei einem Frontalcrash eine Druckstrebe vorgesehen ist, die zur Abstützung des Rahmenträgers zwischen Stirnwand und Rahmenträger angeordnet ist, wobei die Druckstrebe einen die Stirnwand aussteifenden Druckaufnahmebereich umfasst, wozu der Druckaufnahmebereich der Druckstrebe wenigstens teilweise flächig am oberen Bereich der Stirnwand angeordnet ist, und wobei die Druckstrebe ein Abstützende aufweist, welches zur Abstützung am höchsten Punkt des Rahmenträgers angeordnet ist,
- und dass die Druckstrebe zwischen dem Druckaufnahmebereich und dem Abstützende einen sich im Wesentlichen horizontal erstreckenden Übergangsbereich aufweist.

Durch diese erfindungsgemäße Überbrückung des Zwischenraums zwischen Rahmenträger und insbesondere oberer Stirnwand wird ein direktes Gegenlager für den aufstellenden Rahmenträger geschaffen. Darüber hinaus entnimmt die Druckstrebe bei einem Frontal-Crash einen Teil der Vorderrahmenlast und leitet diese über die obere Stirnwand in daran angrenzende Karosserieelemente, wie insbesondere Türschacht und A-Säule um, wodurch der untere Übergangsbereich wesentlich entlastet und die Rahmenaufstellung stark reduziert ist. Dies bewirkt im Vergleich zu einer lediglich im unteren Übergangsbereich des Rahmenträgers angeordneten Aussteifungen zur Abstützung, dass im Falle eines sich aufstellenden Rahmenträgers wesentlich geringere Dreh- und/oder Biegemomente abzufangen sind.

Infolge der durch den Druckaufnahmebereich der Druckstrebe bewirkten Aussteifung der insbesondere oberen Stirnwand wird eine höhere Energieabsorption gezielt auf den vorderen Rahmenträgerbereich erreicht und somit eine Deformation auf einen für die Fahrgastzelle unkritischen Frontbereich des Karosserievorderbaus beschränkt. Dies führt im Falle eines Frontal-Crashs zu wesentlich geringeren Bremspedal-, Lenkungsrückverlagerungen und/oder - aufstellungen und folglich zu wesentlich geringeren Insassenverletzungen insbesondere im Unterschenkel- und Fußbereich.

Die erfindungsgemäße Druckstrebe ist auf einfachste Weise, beispielsweise durch Verschrauben, Verkleben oder Verrasten, aber auch durch Verschweißen montierbar und gewährleistet somit einen sehr effizienten Wirkungsgrad bei im Gegensatz zu Lösungen nach dem Stand der Technik vergleichsweise geringen Herstellungskosten.

Insbesondere bei in einem Bogen vom Frontbereich der Karosserie zum Unterbodenbereich der Fahrgastzelle verlaufenden Rahmenträgern hat sich zur weiteren Verringerung abzufangender Dreh- bzw. Biegemomente zum Abstützen des Rahmenträgers die Anordnung der Druckstrebe im höchsten Punkt des Rahmenträgers, dem sogenannten Rahmenkopf, als besonders vorteilhaft bewährt.

Umgreift die Druckstrebe in besonders bevorzugter Ausführung wenigstens teilweise einen solchen von der Rahmenkonstruktion umfassten Federdom, führt dies darüber hinaus zu einer weiteren Verbesserung der statischen und dynamischen Struktursteifigkeit.

In besonders bevorzugter Weiterbildung ist der Druckaufnahmebereich der Druckstrebe ein im Wesentlichen flächig ausgebildeter Anlagebereich.

In Abhängigkeit spezifischer Karosserieanforderungen, insbesondere zur Aufnahme anordnungsbedingter Aggregate, kann der Anlagebereich auch mit Aussparungen, versehen sein. Zweckmäßiger Weise umfasst die Druckstrebe hierzu zwischen dem Druckaufnahmebereich und dem sich am Rahmenträger abstützenden Ende ferner einen horizontalen Übergangsbereich.

Für eine besonders einfache Herstellung und Montage hat sich eine Druckstrebe aus einem Stück, insbesondere in Form eines Blechs oder als Gussteil als ausreichend erwiesen. Die Druckstrebe kann sowohl aus Metall einschließlich deren Legierungen als auch aus einem Kunststoff, beispielsweise einem kohlefaserverstärkten Kunststoff sein.

Es hat sich ferner als besonders vorteilhaft erwiesen, die Druckstrebe im Wesentlichen mit einem I-förmigen Längsschnitt auszubilden. In der Praxis haben sich jedoch auch aufgrund vorgegebener Package-Anforderung in Kraftfahrzeugen eingebaute Druckstreben mit einem im Wesentlichen V-förmigen Längsschnitt bewährt.

Zur weiteren Erhöhung der Steifigkeit ist ferner vorgesehen, die Druckstrebe mit, insbesondere in Längsrichtung verlaufenden Versteifungseinrichtungen, beispielsweise in Form von Rippen oder Falzungen auszubilden. So ist bevorzugt vorgesehen, den am Rahmenträger angeordneten Endbereich und/oder den Druckaufnahmebereich der Druckstrebe zur weiteren Versteifung des oberen Stirnwandbereichs mit zusätzlichen Versteifungseinrichtungen bzw. mit einem Profil auszubilden.

Zur verbesserten Abstützung der Druckstrebe gegen den Rahmenträger umfasst die erfindungsgemäße Druckstrebe in vorteilhafter Weiterbildung darüber hinaus abgewinkelte Schottwände.

Die Erfindung wird nachfolgend beispielhaft anhand einer bevorzugten Ausführungsform unter Bezugnahme auf die beigefügten Zeichnungen näher beschrieben. In den Zeichnungen zeigen:
- Fig. 1: skizzenhaft, von einer Position schräg oberhalb des Motorraums einen perspektivischen Teilausschnitt der linken Seite eines erfindungsgemäßen Karosserievorderbaus;
- Fig. 2: skizzenhaft, vom Motorraum ausgehend, eine perspektivische Seitenansicht des Bereichs der Fig. 1;
- Fig. 3: skizzenhaft, vom Radhaus ausgehend, eine perspektivische Seitenansicht des Bereichs der Fig. 1; und
- Fig. 4: eine Draufsicht auf den Bereich gemäß Fig. 1.

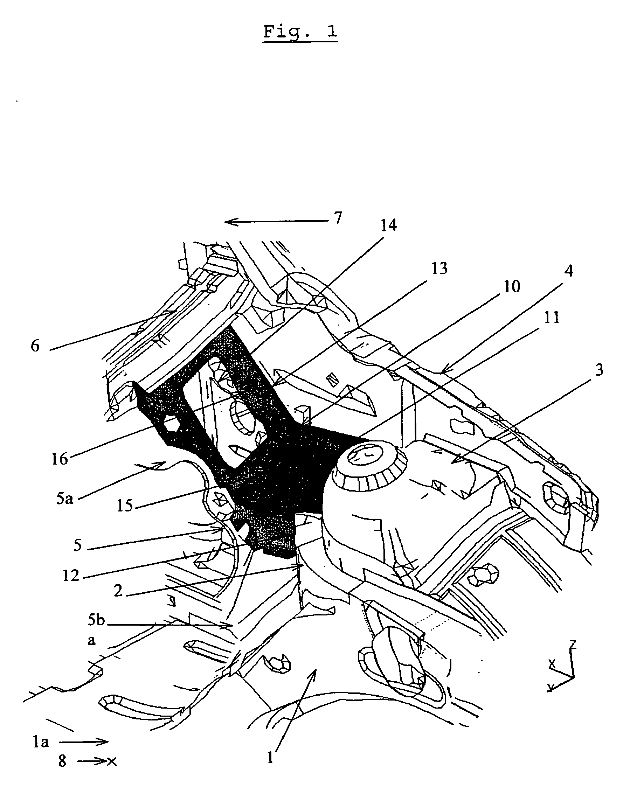

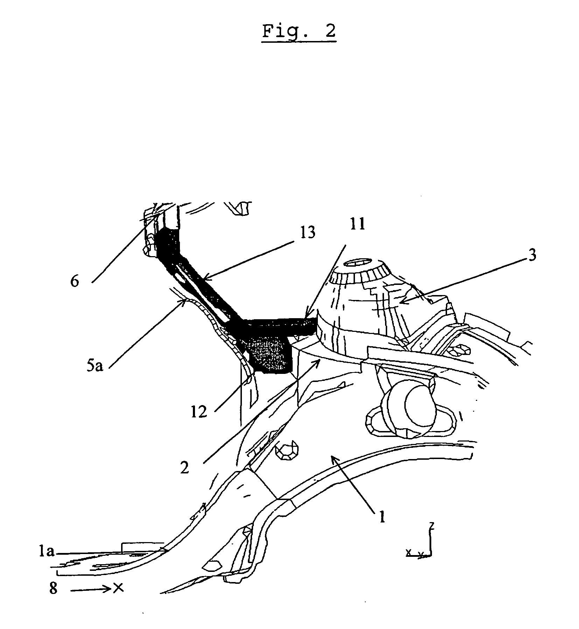

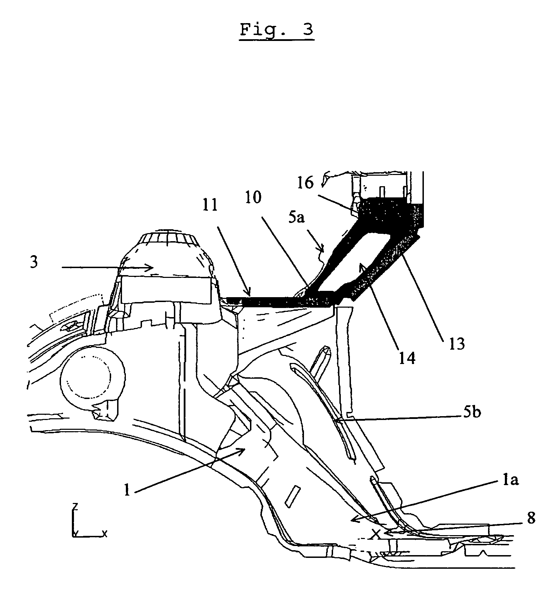

Nach dem in den Figuren 1 bis 4 dargestellten Ausschnitt des linken Seitenbereichs des erfindungsgemäßen Karosserievorderbaus verläuft ein im Ganzen mit 1 gekennzeichneter Rahmenträger in Längsrichtung von einem Frontbereich des Karosserievorderbaus in X-Richtung in einem Bogen bis zu einer nicht näher beschriebenen Verlängerung der Rahmenkonstruktion unterhalb des Bodens einer nicht weiter dargestellten Fahrgastzelle. Im Übergangsbereich zwischen dem Karosserievorderbau und der Fahrgastzelle bildet der Rahmenträger 1 einen abgekröpften Bereich 1a aus. Der Rahmenträger 1 umfasst ferner ein integral angeformtes Profilteil 2, welches sich um einen Teilbereich der Mantelfläche einer domförmig ausgebildeten Federbeinaufnahme 3 erstreckt.

Der Karosserievorderbau wird von einer seitlichen Radhausverkleidung 4, welche je nach spezifischer Ausführungsform mit Versteifungseinrichtungen ausgebildet ist, begrenzt und ist gegenüber der Fahrgastzelle durch eine sich quer zur Längsrichtung des Rahmenträgers 1 erstreckende Stirnwand 5 abgeschlossen.

Die Stirnwand 5 umfasst einen oberen Bereich 5a, der im Wesentlichen den Armaturenbereich der Fahrgastzelle zum Karosserievorderbau abschließt sowie einen unteren Bereich 5b, hinter welchem der Pedalbereich der Fahrgastzelle angeordnet ist. Der obere Stirnwandbereich 5a erstreckt sich beim vorliegenden Ausführungsbeispiel bis an einen die Windschutzscheibe von unten her aufnehmenden Profilträger 6. Im Bereich der Fahrgastzelle schließt sich ferner am hinteren Ende des Radhauses 4 eine A-Säule 7 an.

Der Raum zwischen dem Rahmenträger 1 und dem oberen Stirnwandbereich 5a wird durch eine erfindungsgemäße, zur besseren Kenntlichmachung farblich hervorgehobene Druckstrebe 10 überbrückt. Die Druckstrebe 10 ist in praktischer Weise aus einem Material, insbesondere Metall hoher Steifigkeit hergestellt und in Art eines Blechs geformt. Die Druckstrebe 10 kann jedoch auch aus einem Kunststoff mit ausreichender Steifigkeit und/oder als Gussteil hergestellt werden.

Die Druckstrebe 10 liegt zur Abstützung des Rahmens zweckmäßigerweise am höchsten Punkt des Rahmenträgers 1, der den sogenannten Rahmenkopf bildet, mit entsprechend geformten Abstützenden 11 und 12 an. Die Druckstrebe 10 weist einen sich an die Abstützenden 11 und 12 im Wesentlichen anschließenden großflächig ausgebildeten Druckaufnahmebereich 13 auf, der wenigstens teilweise einen Abschnitt des oberen Stirnwandbereichs 5a flächig bedeckt. Die Druckstrebe 10 versteift und/oder doppelt somit mittels des Druckaufnahmebereichs 13 den oberen Stirnwandbereich 5a und steift diesen folglich aus. Gemäß vorliegendem Ausführungsbeispiel weist der Druckaufnahmebereich 13 eine Aussparung 14 zur Aufnahme eines in diesem Bereich des Karosserievorderbaus vorgesehenen Aggregates auf, wobei zusätzlich ein horizontaler Übergangsbereich zwischen dem Druckaufnahmebereich 13 und den Abstützenden 11 und 12 zum Halten des Aggregates ausgebildet ist.

Die Druckstrebe 10 besitzt eine im Wesentlichen durch den Druckaufnahmebereich 13 und das Abstützende 11 definierte leicht V-förmige Struktur und ist im Wesentlichen tangential zur Rahmenaufstell-Bewegungsrichtung in Folge einer durch einen Crash im Wesentlichen frontal eingeleiteten Kraft, d. h. bei Hochschwenken des Rahmenträgers 1 um eine im abgekröpften Bereich 1a bei 8 angedeutete Schwenkachse, angeordnet.

Die Druckstrebe 10 ist, wie für den Fachmann auf diesem Gebiet ersichtlich, schnell und einfach zwischen den Rahmenträger 1 und der Stirnwand 5 montierbar bzw. auch nachrüstbar. Außer üblichen Fixierungsmitteln, wie beispielsweise Mittel zum Verschrauben, Verrasten oder Verkleben, werden keine aufwendigen Verbindungselemente zur Montage der Druckstrebe 1 benötigt.

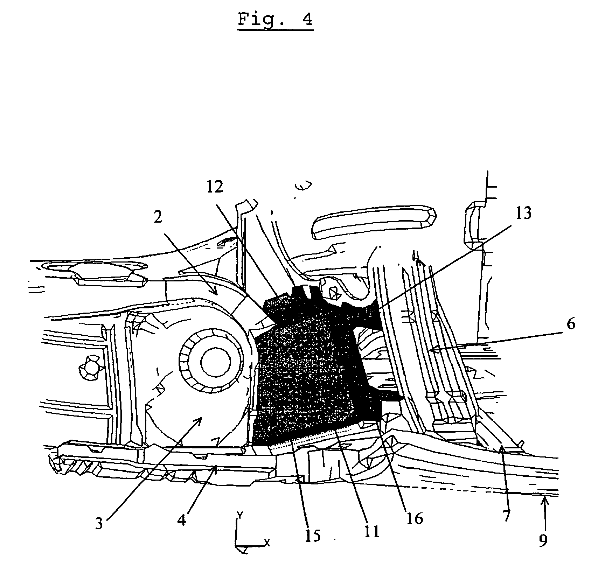

Wie insbesondere aus Fig. 4 ersichtlich ist, umgreift die Druckstrebe 10 mit ihren Abstützenden 11 und 12 wenigstens teilweise den Dom 3, so dass hierüber der Dom 3 selbst sowie der vordere Radeinbau zusätzlich stabilisiert ist und eine darin eingeleitete Last nach hinten weitergeleitet werden kann. Das Abstützende 12 ist gegenüber dem Abstützende 11 schottförmig abgewinkelt, so dass ein wirksameres Umgreifen der Federbeinaufnahme 3 und eine bessere Abstützung gegenüber dem Profilteil 2 des Rahmenträgers 1 gewährleistet ist. Bei einer anderen gegebenen Packagesituation im Kraftfahrzeug könnte die Druckstrebe 10 auch zwischen dem Profilteil 2 und der Stirnwand 5 angeordnet sein.

Die Druckstrebe 10 wirkt somit als direktes Gegenlager für einen sich aufstellenden Rahmenträger 1 bzw. des Rahmenkopfes. Ein ansonsten im Fall einer Aussteifung im abgekröpften Bereich des Übergangsbereichs 1a aufgrund des Hebelarms zwischen Rahmenkopf und dem Übergangsbereich bedingtes Dreh- bzw. Biegemoment muss folglich nur noch zu einem wesentlich verminderten Teil abgefangen werden. Die Druckstrebe 10 weist zur weiteren Versteifung ferner Längsrippen 15 sowie im Druckaufnahmebereich 13 Versteifungsfalzungen 16 auf.

Über den Druckaufnahmebereich 13 leitet die Druckstrebe 10 eingeleitete Kräfte in den oberen Stirnwandbereich 5a und schließlich in die A-Säule 7 und/oder in ein Türschachtprofil 9 um. Der untere Übergangsbereich 1a, der herkömmlicher Weise ein plastisches Gelenk für den Karosserievorderbau bereitstellt, wird dadurch entlastet und die Rahmenaufstellung stark reduziert.

Durch die erfindungsgemäße Druckstrebe 10 können somit ansonsten notwendige Zusatzaussteifungen, insbesondere im abgekröpften Bereich 1a des Übergangsbereichs wesentlich reduziert werden, welches letztlich auch eine Verringerung der Herstellungskosten zur Folge hat.

Die erfindungsgemäße Druckstrebe ist somit ein hocheffektives Bauteil, welches je nach spezifischer Karosserieausbildung mit ausreichend hoher Steifigkeit auf einfachste Weise herstellbar ist.

Es sei darauf hingewiesen, dass die vorgehende Beschreibung der linken Seite des Karosserievorderbaus gleichermaßen auf die rechte Seite anwendbar ist. Darüber hinaus sind von der Erfindung auch Ausführungsformen umfasst, bei denen die Druckstrebe 10 einen im Wesentlichen geradlinigen, I-förmigen Querschnitt umfasst und/oder das Abstützende 11 direkt am Federdom 3 befestigt ist.

### Bezugszeichenliste

- Rahmenträger: 1
- Übergangsbereich: 1a
- Profilteil: 2
- Dom: 3
- Radhaus: 4
- Stirnwand: 5
- oberer Stirnwandbereich: 5a
- unterer Stirnwandbereich: 5b
- Profilträger: 6
- A-Säule: 7
- Schwenkachse: 8
- Türschacht: 9
- Druckstrebe: 10
- Abstützenden: 11, 12
- Druckaufnahmebereich: 13
- Aussparung im Druckaufnahmebereich: 14
- Versteifungsrippen: 15
- Versteifungsfalzungen: 16

## Patentansprüche

1. Karosserievorderbau eines Kraftfahrzeuges, umfassend
- eine Rahmenkonstruktion, die wenigstens einen Rahmenträger (1) umfasst, der sich im Wesentlichen in Längsrichtung der Karosserie von deren Frontbereich zu einer Verlängerung der Rahmenkonstruktion am Unterbodenbereich der Fahrgastzelle erstreckt, wobei
- der Rahmenträger in Längsrichtung von einem Frontbereich des Karosserievorderbaus in X-Richtung in einem Bogen bis zu einer Verlängerung der Rahmenkonstruktion unterhalb des Bodens der Fahrgastzelle verläuft und dazu in einem Übergangsbereich zwischen dem Karosserievorderbau und der Fahrgastzelle einen abgekröpften Bereich (1a) ausbildet, und wobei im Übergangsbereich eine sich im Wesentlichen parallel zur Stirnwand erstreckende Schwenkachse (8) ausgebildet ist.
- eine den Karosserievorderbau zur Fahrgastzelle hin abschließende, sich quer zur Längsrichtung erstreckende Stirnwand (5, 5a, 5b), wobei die Stirnwand einen unteren Bereich (5b) und einen oberen Bereich (5a) umfasst,
**dadurch gekenntzeichnet,**
- **dass** zur Reduzierung der Rahmenaufstellung infolge einer durch einen Frontal-Crash bedingten Krafteinleitung eine Druckstrebe (10) vorgesehen ist, die zur Abstützung des Rahmenträgers (1) zwischen der Stirnwand (5, 5a) und dem Rahmenträger (1) angeordnet ist, wobei die Druckstrebe (10) einen die Stirnwand (5) aussteifenden Druckaufnahmebereich (13) umfaßt, wozu der Druckaufnahmebereich (13) der Druckstrebe (10) wenigstens teilweise flächig am oberen Bereich (5a) der Stirnwand angeordnet ist, und wobei die Druckstrebe (10) ein Abstützende (11, 12) aufweist, welches zur Abstützung am höchsten Punkt des Rahmenträgers (1) angeordnet ist,
- und dass die Druckstrebe (10) zwischen Druckaufnahmebereich (13) und Abstützende (11, 12) einen sich im Wesentlichen horizontal erstreckenden Übergangsbereich aufweist.

2. Karosserievorderbau, nach Anspruch 1, **dadurch gekennzeichnet, dass** das Abstützende (11, 12) der Druckstrebe (10) Versteifungseinrichtungen (15), insbesondere in Form von Rippen und/oder Falzungen umfasst.

3. Karosserievorderbau, nach Anspruch 2, **dadurch gekennzeichnet, dass** das Abstützende (11, 12) der Druckstrebe (10) zur Abstützung gegen den Rahmenträger (1) wenigstens eine seitlich abgewinkelte Schottwand (12) umfasst.

4. Karosserievorderbau nach einem der Ansprüche 1 bis 3, **dadurch gekennzeichnet, dass** die Druckstrebe (10) mit ihrem Abstützende (11, 12) wenigstens teilweise einen von der Rahmenkonstruktion umfassten Federdom (3) umgreift.

5. Karosserievorderbau, nach einem der Ansprüche 1 bis 4, **dadurch gekennzeichnet, dass** der Druckaufnahmebereich (13) der Druckstrebe (10) Versteifungseinrichtungen (16), insbesondere in Form von Falzungen und/oder Rippen umfasst.

6. Karosserievorderbau, nach einem der Ansprüche 1 bis 5, **dadurch gekennzeichnet, dass** der Druckaufnahmebereich (13) der Druckstrebe (10) Aussparungen (14) aufweist.

7. Karosserievorderbau, nach einem der Ansprüche 1 bis 6, **dadurch gekennzeichnet, dass** die Druckstrebe (10) aus einem Stück geformt ist.

8. Karosserievorderbau, nach einem der Ansprüche 1 bis 7, **dadurch gekennzeichnet, dass** die Druckstrebe (10) als Blech oder als Gussteil ausgebildet ist.

9. Karosserievorderbau, nach einem der Ansprüche 1 bis 8, **dadurch gekennzeichnet, dass** die Druckstrebe (10) aus Metall oder aus Kunststoff besteht.

10. Karosserievorderbau, nach einem der Ansprüche 1 bis 9, **dadurch gekennzeichnet, das** die Druckstrebe (10) im Wesentlichen einen V-förmigen Längsschnitt aufweist.

11. Karosserievorderbau, nach einem der Ansprüche 1 bis 9, **dadurch gekennzeichnet, das** die Druckstrebe (10) im Wesentlichen einen I-förmigen Längsschnitt aufweist.

## Claims

1. Front structure for a motor vehicle, comprising:
- a frame structure comprising at least one frame support (1) which ranges essentially along the longitudinal direction of the front structure of the motor vehicle from its front structure to a extension of the frame structure on the undersurface sector of the passenger cabin, wherein:
- the frame support along the longitudinal direction ranges from a front structure of the front structure of the motor vehicle along the direction X in an arrow to one of the extensions of the frame structure on the undersurface of the passenger cabin, and in addition it forms an offset area (1a) in a transition area between the front structure of the motor vehicle and the passenger cabin, and wherein in the transition area an axis of rotation (8) essentially parallel to the frontal wall is designed,
- a frontal wall (5, 5a, 5b) closing the front structure of the motor vehicle next to the passenger cabin and extending diagonally to the longitudinal direction, wherein the frontal wall comprises an inferior area (5b) and an upper area (5a),
**characterized in that**
- for the reduction of the disposition of the frame in case of a transmission of force caused by a frontal cash there is a traction strut (10) which is aligned for the brace support of the frame support (1) between the frontal wall (5, 5a) and the frame support (1), wherein the traction strut (10) comprises a traction acceptance area (13) digressing the frontal wall (5), whereto the traction acceptance area (13) of the traction strut (10) is aligned at least partially on the surface of the upper area (5a) of the frontal wall, and wherein the traction strut (10) is equipped with a brace support (11, 12) which is aligned on the highest point of the frame support (1) as support, and
- the traction strut (10) between the traction acceptance area (13) and the brace support (11, 12) is equipped with a transition area essentially extended along the horizontal direction.

2. Front structure for a motor vehicle according to claim 1, **characterized in that** the brace support (12, 12) of the traction strut (10) comprises hardening equipments (15), primarily in the shape of ribs and/or folding points.

3. Front structure for a motor vehicle according to claim 2, **characterized in that** the brace support (12, 12) of the traction strut (10) comprises at least one lateral angled stiffener wall (12) in order to support it against the frame support (1).

4. Front structure for a motor vehicle according to one of the claims 1 to 3, **characterized in that** the traction strut (10) with its brace support (11, 12) encompasses at least partially a spring dome (3) compassed by the frame structure.

5. Front structure for a motor vehicle according to one of the claims 1 to 4, **characterized in that** the traction acceptance area (13) of the traction strut (10) comprises hardening equipments (16), primarily in the shape of folding points and/or ribs.

6. Front structure for a motor vehicle according to one of the claims 1 to 5, **characterized in that** the traction acceptance area (13) of the traction strut (10) is equipped with openings (14).

7. Front structure for a motor vehicle according to one of the claims 1 to 6, **characterized in that** the traction strut (10) is made of one piece.

8. Front structure for a motor vehicle according to one of the claims 1 to 7, **characterized in that** the traction strut (10) is made of a plate or cast part.

9. Front structure for a motor vehicle according to one of the claims 1 to 8, **characterized in that** the traction strut (10) is made of metal or synthetic material.

10. Front structure for a motor vehicle according to one of the claims 1 to 9, **characterized in that** the traction strut (10) is essentially equipped with a longitudinal cut in the shape of a V.

11. Front structure for a motor vehicle according to one of the claims 1 to 10, **characterized in that** the traction strut (10) is essentially equipped with a longitudinal cut in the shape of an I.

## Revendications

1. Construction avant de la carrosserie d'un véhicule automobile, présente :
- un châssis à au moins une poutre (1) rallongé, pour l'essentiel, suivant une direction longitudinale de la carrosserie, rallongée de la partie frontale vers le châssis, au bas de l'habitacle, avec
- la poutre - châssis, qui s'allonge, suivant le sens longitudinal, de la construction frontale de la carrosserie, orientation X, coudée jusqu'à une extension du châssis, au bas de l'habitacle du véhicule et forme, en outre, dans une portion intermédiaire, entre la construction avant de la carrosserie et l'habitacle, une portion coudée (1a), où s'allonge l'axe de pivotement dans la partie intermédiaire, dans un sens parallèle à la façade frontale (8),
- une façade frontale (5, 5a, 5b), s'étendant de la carrosserie avant jusqu'à l'habitacle selon une direction transversale à un plan longitudinal, la façade frontale incluant une partie inférieure (5b) et une partie supérieure (5a),
**caractérisée en ce que**
- afin de réduire le châssis pour une répartition des charges, en cas de collision frontale, un bras poussoir (10) est aménagé, pour supporter le châssis (1), entre la façade frontale (5, 5a) et le châssis (1), de sorte que le bras poussoir (10) inclut l'élément raidisseur de la façade frontale (5) dans les limites de pression admissibles 13). Les limites de pression admissibles (10) du bras poussoir (10) sont aménagées, au moins partiellement, à la surface supérieure de la façade (5a) et le bras poussoir (10) présente un point porteur (11, 12) relié au point le plus haut du châssis (1),
- et que le bras poussoir entre la zone des limites de pressions admises (13) et le point porteur (11, 12) présente, pour l'essentiel, une partie intermédiaire prolongée.

2. Construction avant de carrosserie selon la revendication 1, **caractérisée en ce que** le dispositif porteur (11, 12) du bras poussoir (10) comporte des profilés apportant la rigidité (15), notamment sous forme de crénelures et/ou de plissements.

3. Construction avant de carrosserie selon la revendication 2, **caractérisée en ce que** le point de fixation (11, 12) du bras de poussée (10), contribue à ancrer au châssis (1) au moins une partie de la façade en angle latéral (12).

4. Construction avant de carrosserie selon l'une des revendications 1 à 3, **caractérisée en ce que** le bras poussoir (10), avec son extrémité d'élément porteur (11, 12) inclut au moins une construction partielle du cadre, y compris l'élément ressorts (3).

5. Construction avant de carrosserie selon l'une des revendications 1 à 4, **caractérisée en ce que** les limites des pressions admises (13) du bras poussoir (10) incluent des profilés apportant la rigidité (16), notamment sous forme de plissements et/ou de crénelures.

6. Construction avant de carrosserie selon l'une des revendications 1 à 5, **caractérisée en ce que** les zones de pression admissibles (13) du bras poussoir (10) présentent des corps creux.

7. Construction avant de carrosserie selon l'une des revendications 1 à 6, **caractérisée en ce que** le bras poussoir (10) soit formé d'une seule pièce.

8. Construction avant de carrosserie selon l'une des revendications 1 à 7, **caractérisée en ce que** le bras poussoir (10) soit en tôle ou en fonte.

9. Construction avant de carrosserie selon l'une des revendications 1 à 8, **caractérisée en ce que** le bras poussoir (10) soit en métal ou en matière plastique.

10. Construction avant de carrosserie selon l'une des revendications 1 à 9, **caractérisée en ce que** le bras poussoir (10) présente, pour l'essentiel, une coupe longitudinale en forme de V.

11. Construction avant de carrosserie selon l'une des revendications 1 à 9, **caractérisée en ce que** le bras poussoir (10) présente, pour l'essentiel, une coupe longitudinale en forme de I.
